# EUROPEAN PATENT APPLICATION

(11) **EP 4 760 760 A1**
(43) Date of publication of application: **17.06.2026**
(21) Application number: 24864274.6
(22) Date of filing: 18.07.2024
(51) Int. Cl.: H01G 2/10, H01G 2/08, H01G 4/228

(54) **CAPACITOR MODULE AND POWER CONVERTER**

(30) Priority: 15.09.2023 CN 202311199782
(71) Applicant: Huawei Digital Power Technologies Co., Ltd., Shenzhen, Guangdong 518043 (CN)
(72) Inventor: XU, Xiaoyi, Shenzhen, Guangdong 518043 (CN); CHEN, Chunjin, Shenzhen, Guangdong 518043 (CN); LI, Sheng, Shenzhen, Guangdong 518043 (CN)
(74) Representative: Maiwald GmbH
(86) International application number: PCT/CN2024/106137
(87) International publication number: WO 2025/055550

(57) **Abstract**

This application relates to the field of capacitor technologies, and in particular, to a capacitor module and a power converter. The capacitor module includes a housing and a capacitor core package assembly. The housing includes an accommodating cavity having an opening at one end, and the accommodating cavity is configured to accommodate the capacitor core package assembly. The capacitor core package assembly includes a plurality of capacitor core packages, a gap exists between two adjacent capacitor core packages, a part of a cathode foil included in the capacitor core package is exposed on a surface of the capacitor core package, the exposed part of the cathode foil is located at an end that is of the capacitor core package and that is away from the opening of the housing, and the exposed part of the cathode foil is in contact with the housing, to transfer heat generated by the capacitor core package to the housing. In this application, the capacitor module integrates the plurality of capacitor core packages into one accommodating cavity, to reduce a size of the capacitor module.

## Description

### CROSS-REFERENCE TO RELATED APPLICATIONS

This application claims priority to Chinese Patent Application No. 202311199782.1, filed with the China National Intellectual Property Administration on September 15, 2023 and entitled "CAPACITOR MODULE AND POWER CONVERTER", which is incorporated herein by reference in its entirety.

### TECHNICAL FIELD

This application relates to the field of capacitor technologies, and in particular, to a capacitor module and a power converter.

### BACKGROUND

A capacitor is a passive energy storage component, and is usually used for filtering, coupling, direct current blocking, and bypassing in a circuit. Generally, the capacitor has a discrete structure. A user combines discrete capacitors by connecting the capacitors in series and in parallel for use, to meet indicators of a product, such as a voltage, capacity, a compensation frequency, and a ripple current.

In the conventional technology, a capacitor module is formed by assembling discrete capacitors, and a discrete capacitor includes a capacitor core package and a metal housing. Capacitor core packages in two adjacent discrete capacitors are separated by metal housings and a gap. Consequently, a size of the capacitor module is large.

### SUMMARY

Embodiments of this application provide a capacitor module and a power converter. The capacitor module integrates a plurality of capacitor core packages into one accommodating cavity, to reduce a size of the capacitor module.

According to a first aspect, a capacitor module is provided, where the capacitor module includes a housing and a capacitor core package assembly, the housing includes an accommodating cavity having an opening at one end, and the accommodating cavity accommodates the capacitor core package assembly. The capacitor core package assembly includes a plurality of capacitor core packages, a gap exists between two adjacent capacitor core packages, the capacitor core package includes a cathode foil, a part of the cathode foil is exposed on a surface of an end that is of the capacitor core package and that is away from the opening, and the exposed part of the cathode foil is in contact with the housing, to transfer heat generated by the capacitor core package to the housing. In this application, the cathode foil included in the capacitor core package is directly in contact with the housing, so that heat generated by the capacitor core package can be quickly dissipated through the housing, heat dissipation efficiency of the capacitor core package is improved, and heat dissipation efficiency of the capacitor module is further improved, so as to improve a service life of the capacitor module. In addition, in this application, the capacitor module integrates the plurality of capacitor core packages into one accommodating cavity, so that space occupied by an aluminum plate can be saved, thereby reducing the size of the capacitor module.

The capacitor core package may be in a cylindrical shape or a rectangular shape. When the capacitor core package is in a rectangular shape, the capacitor core package is prepared through a winding or lamination process.

In an embodiment, the capacitor core package further includes an anode foil and a stop-coil strip, and the stop-coil strip is located on an outer circumferential side of the capacitor core package. The cathode foil is located between the anode foil and the stop-coil strip, and in a first direction, a length of the stop-coil strip is less than a length of the cathode foil, to ensure that a part of the cathode foil can be exposed outside the capacitor core package. Alternatively, the anode foil is located between the cathode foil and the stop-coil strip, and in a first direction, a length of the cathode foil is greater than a length of the stop-coil strip and a length of the anode foil. This can also ensure that the cathode foil is exposed outside the capacitor core package and is in contact with the housing, to dissipate heat of the capacitor core package. It should be noted that the first direction is a direction perpendicular to a bottom wall of the housing.

In an embodiment, the capacitor module further includes a positioning plate, the positioning plate includes a plurality of positioning portions, a gap exists between two adjacent positioning portions, and each of the positioning portions fastens one capacitor core package. In this manner, the plurality of positioning portions are configured to fasten the plurality of capacitor core packages, so that a gap exists between two adjacent capacitor core packages. The plurality of capacitor core packages may be prefabricated on the positioning plate, to improve convenience of assembling the capacitor module.

It should be noted that the positioning plate may be prepared through an insulation pad.

In an embodiment, the capacitor module further includes a plurality of support columns arranged in an array, and the plurality of support columns are fastened to a bottom wall of the housing. Each capacitor core package includes a center hole, the center hole runs through the capacitor core package in a first direction, an axis of the center hole overlaps a center line of the capacitor core package, and the plurality of support columns respectively run through center holes of the plurality of capacitor core packages. The plurality of capacitor core packages are fastened to the housing through the plurality of support columns, to improve convenience of mounting the capacitor core packages in the housing. The first direction is a direction perpendicular to the bottom wall of the housing.

In an embodiment, when the capacitor core packages are fastened to the housing through the support columns, in the first direction, lengths of the plurality of support columns are less than heights of the center holes in the plurality of capacitor core packages. Alternatively, in the first direction, the lengths of the plurality of support columns are greater than the heights of the center holes of the plurality of capacitor core packages. When the lengths of the plurality of support columns are greater than the heights of the center holes of the plurality of capacitor core packages, to improve stability of mounting the capacitor core packages in the housing, the capacitor module further includes a press plate, the press plate includes a plurality of fixing holes, a gap exists between two adjacent fixing holes, the press plate covers one end that is of the capacitor core package assembly and that faces the opening, and ends that are of the plurality of support columns and that are away from the bottom wall are separately fastened to the plurality of fixing holes, to limit movement of the capacitor core packages in the first direction.

In an embodiment, to enable anode foil tabs of the plurality capacitor core packages to be connected in series and parallel, and cathode foil tabs of the plurality of capacitor core packages to be connected in series and parallel, the capacitor core package assembly further includes a positive busbar and a negative busbar, the positive busbar is connected to anode foil tabs of the plurality of capacitor core packages, the negative busbar is connected to cathode foil tabs of the plurality of capacitor core packages, and the positive busbar and the negative busbar are located at the end that is of the capacitor core package assembly and that faces the opening. It should be noted that the anode foil tab may be understood as a positive tab, and the cathode foil tab may be understood as a negative tab.

In an embodiment, to improve safety of the capacitor core package, the anode foil tab includes a fuse apparatus. Alternatively, the positive busbar includes a fuse apparatus. Alternatively, the cathode foil tab includes a fuse apparatus. Alternatively, the negative busbar includes a fuse apparatus.

In an embodiment, the fuse apparatus included in the anode foil tab is a first hole, and the first hole runs through the anode foil tab in a thickness direction of the anode foil tab. The first hole is fused to ensure safety of the capacitor core package.

In an embodiment, the fuse apparatus included in the cathode foil tab is a second hole, and the second hole runs through the cathode foil tab in a thickness direction of the cathode foil tab. The second hole is fused to ensure safety of the capacitor core package.

In an embodiment, the fuse apparatus included in the positive busbar is a third hole, and the third hole runs through the positive busbar in a thickness direction of the positive busbar. The third hole is fused to ensure safety of the capacitor core package.

In an embodiment, the fuse apparatus included in the negative busbar is a fourth hole, and the fourth hole runs through the negative busbar in a thickness direction of the negative busbar. The fourth hole is fused to ensure safety of the capacitor core package.

In an embodiment, the capacitor module further includes a packaging board, the packaging board is fastened to the opening of the housing, and the packaging board and the housing are enclosed to form a sealed mounting cavity. It may be understood that the packaging board seals the accommodating cavity to form the accommodating cavity. The packaging board is configured to seal the plurality of capacitor core packages, the positive busbar, and the negative busbar in the housing, so as to improve working stability of the capacitor core packages.

In an embodiment, the positive busbar includes a positive binding post, the negative busbar includes a negative binding post, and both the positive binding post and the negative binding post run through the packaging board, so that a current output end of the capacitor module is located on one side of the packaging board. Alternatively, the positive binding post and the negative binding post run through a side wall of the housing, so that the current output end of the capacitor module is located on one side of the side wall of the housing.

In an embodiment, the capacitor module further includes an insulation layer, and the insulation layer is filled between the plurality of capacitor core packages and the packaging board, so as to ensure that the anode foil tabs and the cathode foil tabs are not electrically connected to the housing.

In an embodiment, the packaging board includes at least one pressure relief damper, to prevent the capacitor module from explosion.

When there is one pressure relief damper, the pressure relief damper is arranged at a center of the packaging board. When there are a plurality of pressure relief dampers, the plurality of pressure relief dampers are arranged in an array, and in the first direction, each pressure relief damper corresponds to one capacitor core package.

In an embodiment, to dissipate heat for the housing, the capacitor module further includes a heat sink, and the heat sink is connected to the housing. More specifically, the heat sink is attached to the bottom wall of the housing. A large thermally conductive insulation adhesive or a thermally conductive silicone pad may be disposed between the heat sink and the capacitor module.

According to a second aspect, a power converter is provided, where the power converter includes a power module and the capacitor module in any technical solution of the first aspect, the power module is electrically connected to the capacitor core package assembly, and the power module is disposed on a side that is of the capacitor module and that is away from a bottom wall of the housing. In this embodiment, heat dissipation efficiency of the capacitor module is high, so that heat dissipation efficiency of the power converter having the capacitor module is high, and working stability of the power converter can be improved.

### BRIEF DESCRIPTION OF DRAWINGS

FIG. 1 is a diagram of a structure of a capacitor core package in a capacitor module according to an embodiment of this application;
FIG. 2 is a diagram of a structure of a capacitor module according to an embodiment of this application;
FIG. 2a is a diagram of a structure of a capacitor core package according to this embodiment;
FIG. 2b is a diagram of another structure of a capacitor core package according to this embodiment;
FIG. 3 is a diagram of a structure of a capacitor core package assembly in a capacitor module according to an embodiment of this application;
FIG. 4 is a diagram of a structure of a housing in a capacitor module according to an embodiment of this application;
FIG. 5 is a diagram of a structure of a capacitor module according to an embodiment of this application;
FIG. 6a is a diagram of another structure of a capacitor core package in a capacitor module according to an embodiment of this application;
FIG. 6b is a diagram of a structure of a capacitor core package assembly in a capacitor module according to an embodiment of this application;
FIG. 7 is a diagram of a structure of a heat sink in a capacitor module according to an embodiment of this application; and
FIG. 8 is a diagram of another structure of a capacitor module according to an embodiment of this application.

Reference numerals:
1: capacitor core package assembly; 10: capacitor core package; 10a: cathode foil; 10b: anode foil; 10c: stop-coil strip; 10d: electrolytic paper; 100: anode foil tab; 1000: first hole; 101: cathode foil tab; 1010: second hole; 102: exposed part of the cathode foil; 103: center hole; 11: positioning plate; 2: housing; 20: accommodating cavity; 21: support column; 22: connecting portion; 23: lead-out hole; 3: press plate; 4: positive busbar; 40: positive binding post; 41: third hole; 5: negative busbar; 50: negative binding post; 51: fourth hole; 6: packaging board; 60: pressure relief damper; and 7: heat sink.

### DESCRIPTION OF EMBODIMENTS

To make the objectives, technical solutions, and advantages of this application clearer, the following further describes this application in detail with reference to the accompanying drawings.

In the conventional technology, a capacitor module is widely used in the field of electric vehicles, the photovoltaic field, and other fields. The capacitor module generally includes a plurality of discrete capacitors. The plurality of discrete capacitors are connected in series and parallel through a busbar and a circuit board. Each discrete capacitor needs an independent fixing apparatus to be fastened, and each discrete capacitor further needs an independent isolation apparatus to isolate two adjacent discrete capacitors. Consequently, a size of the capacitor module including the plurality of discrete capacitors is large. In addition, in the conventional technology, heat dissipation performance of the capacitor module is poor, affecting working performance and a service life of the capacitor module.

Therefore, a new capacitor module is urgently required, to resolve the problem in the conventional technology that a capacitor module has a large size and poor heat dissipation performance.

Terms used in the following embodiments are merely intended to describe specific embodiments, but are not intended to limit this application. The terms "one", "a", "the" and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

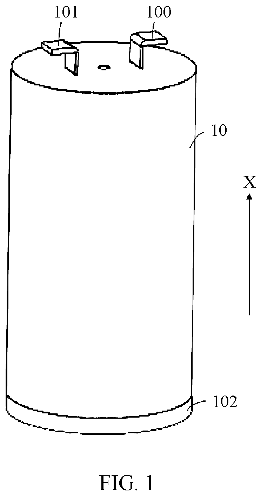

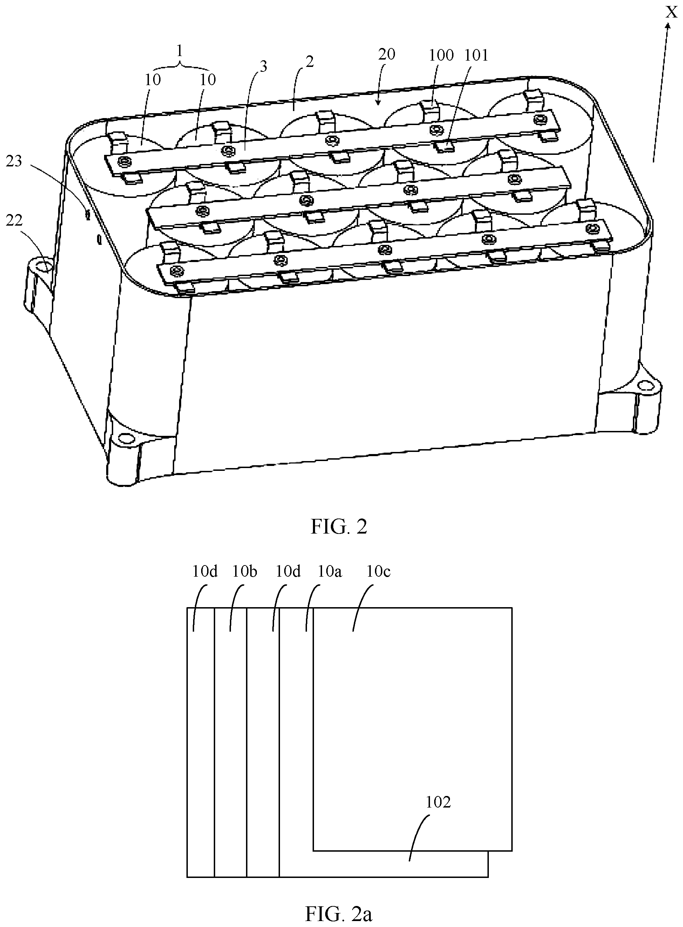

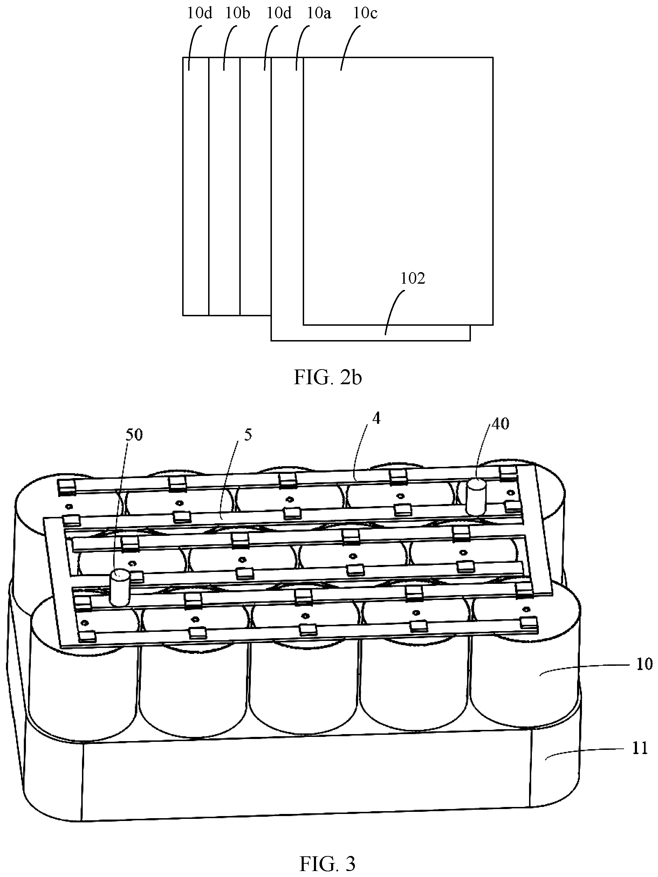

FIG. 1 is a diagram of a structure of a capacitor core package in a capacitor module according to an embodiment of this application. FIG. 2 is a diagram of a structure in which a packaging board and a heat sink are not displayed in a capacitor module according to an embodiment of this application. With reference to FIG. 1 and FIG. 2, the capacitor module includes a housing 2 and a capacitor core package assembly 1. The housing 2 includes an accommodating cavity 20 having an opening at one end, and the accommodating cavity 20 accommodates the capacitor core package assembly 1. The capacitor core package assembly 1 includes a plurality of capacitor core packages 10, and a gap exists between every two adjacent capacitor core packages 10. FIG. 2a is a diagram of a structure of a capacitor core package according to this embodiment, and FIG. 2b is a diagram of another structure of a capacitor core package according to this embodiment. With reference to FIG. 1, FIG. 2, FIG. 2a, and FIG. 2b, the capacitor core package 10 includes an anode foil 10b, a cathode foil 10a, an electrolytic paper 10d, and a stop-coil strip 10c. The electrolytic paper 10d is located between the anode foil 10b and the cathode foil 10a, the cathode foil 10a is located between the anode foil 10b and the electrolytic paper 10d, and the anode foil 10b is located between two electrolytic papers 10d. For ease of understanding, the following uses a direction perpendicular to a bottom wall of the housing 2 as a first direction. In an embodiment, in the first direction X, a length of the stop-coil strip 10c is less than a length of the cathode foil 10a, so that a part of the cathode foil 10a is exposed on a surface of the capacitor core package 10. In an embodiment, in the first direction X, the length of the cathode foil 10a is greater than the length of the stop-coil strip 10c and a length of the anode foil 10b, so that a part of the cathode foil 10a is exposed on the surface of the capacitor core package 10.

In an embodiment, when the capacitor core package 10 is disposed in the accommodating cavity 20, an exposed part 102 of the cathode foil of each capacitor core package 10 is located at one end that is of the capacitor core package 10 and that is away from the opening of the housing, and the exposed part 102 of the cathode foil is configured to be in contact with the housing 2, to transfer heat generated by the capacitor core package 10 to the housing 2. Specifically, the cathode foil included in the capacitor core package 10 is directly in contact with the housing 2, so that the heat generated by the capacitor core package 10 can be quickly dissipated through the housing 2, to improve heat dissipation efficiency of the capacitor core package 10, thereby improving heat dissipation efficiency of the capacitor module 1, and further improving a service life of the capacitor module 1. In addition, the plurality of capacitor core packages 10 are arranged in one accommodating cavity 20 included in the housing 2, and the gap exists between every two adjacent capacitor core packages 10. When a quantity of capacitor core packages 10 included in the capacitor module in this application is the same as a quantity of discrete capacitors included in the capacitor module in the conventional technology, because two adjacent discrete capacitors are separated by an aluminum plate, a size of the capacitor module in the conventional technology is large. However, in this application, the capacitor module integrates the plurality of capacitor core packages 10 into one accommodating cavity 20, so that space occupied by the aluminum plate can be saved, thereby reducing the size of the capacitor module.

It should be noted that, the capacitor core package 10 may be in a cylindrical shape or a rectangular shape, but the shape is not limited thereto. When the capacitor core package is in a rectangular shape, the capacitor core package is prepared through a winding or lamination process.

In an embodiment, FIG. 3 is a diagram of a structure of a capacitor core package assembly in a capacitor module according to an embodiment of this application. With reference to FIG. 2 and FIG. 3, the capacitor module further includes a positioning plate 11, and the plurality of capacitor core packages 10 may be integrated on the positioning plate 11. Specifically, a bottom surface of the capacitor core package 10 can be fastened to the positioning plate 11 in a bonding manner. In this case, the exposed part 102 of the cathode foil of the capacitor core package 10 is in contact with a side wall of the housing. Alternatively, a surface of the positioning plate 11 includes a plurality of positioning portions, and a gap exists between the plurality of positioning portions. The positioning portion may be, but is not limited to, a slot, a limiting slot, or the like. To be specific, a plurality of trench portions are disposed on the surface of the positioning plate 11, so that the capacitor core package 10 can be clamped in the positioning portion, and the exposed part 102 of the cathode foil of the capacitor core package 10 runs through the positioning plate 11 to be in contact with the housing 2. In this manner, before the plurality of capacitor core packages 10 are mounted in the accommodating cavity of the housing, the plurality of capacitor core packages 10 can be integrated on the positioning plate 11 in a bonding or clamping manner. In this way, the capacitor core package assembly 1 can be prefabricated, so that components in the capacitor module are modularized, thereby improving convenience of assembling the capacitor module.

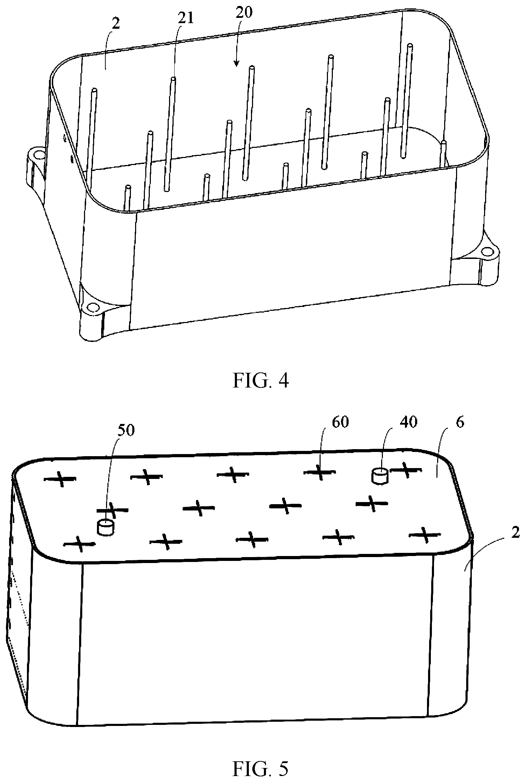

In an embodiment, FIG. 4 is a diagram of a structure of a housing in a capacitor module according to an embodiment of this application. With reference to FIG. 1 and FIG. 4, the housing 2 includes a plurality of support columns 21, the plurality of support columns 21 are distributed in an array, the plurality of support columns 21 are fixed on the bottom wall of the housing 2, and the plurality of support columns 21 and the housing 2 are integrally prepared. Each capacitor core package 10 includes a center hole 103, and an axis of the center hole 103 overlaps a center line of the capacitor core package 10. Both the axis of the center hole 103 and the center line of the capacitor core package 10 extend in the first direction X. The capacitor core package 10 runs through the center hole 103 onto the support column 21. In this case, the exposed part 102 of the cathode foil of the capacitor core package 10 is in contact with the bottom wall of the housing 2.

It should be noted that the plurality of support columns 21 are perpendicular to the bottom wall of the housing 2, heights of the plurality of support columns 21 in the first direction X may be less than lengths of the center holes 103, or the heights of the plurality of support columns 21 are greater than the lengths of the center holes 103, and the plurality of support columns 21 are configured to limit movement of the plurality of capacitor core packages 10 in a direction perpendicular to the first direction X.

With reference to FIG. 2 and FIG. 4, the capacitor module further includes a press plate 3. The press plate 3 includes a plurality of fixing holes. A gap between two adjacent fixing holes in the plurality of fixing holes is the same as a gap between two adjacent support columns 21 in a plurality of support columns 21 included in a row of support columns 21. The press plate 3 covers an end that is of the capacitor core package assembly and that faces the opening. The plurality of fixing holes cooperate with parts that are of the support columns 21 and that run through the capacitor core packages 10, and the capacitor core package 10 is clamped between the press plate 3 and the bottom wall of the housing 2 through a locking piece. The locking piece is a nut or a lock clip. When the locking piece is a nut, one end that is of the support column 21 and that is away from the bottom wall of the housing 2 includes a thread, so that the nut cooperates with the support column 21 to fasten the capacitor core package 10. Correspondingly, when the locking piece is a lock clip, one end that is of the support column 21 and that is away from the bottom wall of the housing 2 may be the same as one end that is of the support column 21 and that is close to the bottom wall of the housing 2. The lock clip clamps a part that is of the support column 21 and that extends out of the press plate 3, to fasten the capacitor core package 10, thereby improving stability of the capacitor core package 10.

It should be noted that there may be a plurality of press plates 3, to fasten the plurality of capacitor core packages 10 distributed in an array, and limit movement of the capacitor core packages 10 in the first direction X.

In the foregoing embodiment, still with reference to FIG. 3, the capacitor module further includes a busbar, where the busbar includes a positive busbar 4 and a negative busbar 5. The positive busbar 4 and the negative busbar 5 are fastened through an insulation mechanical part. The positive busbar 4 connects anode foil tabs 100 of a same row of capacitor core packages 10 in series, and the positive busbar 4 further connects anode foil tabs 100 of a plurality of rows of capacitor core packages 10 in parallel. The negative busbar 5 connects cathode foil tabs 101 of a same row of capacitor core packages 10 in series, and the negative busbar 5 further connects cathode foil tabs 101 of a plurality of rows of capacitor core packages 10 in parallel, to implement serial-parallel connection between the plurality of capacitor core packages 10.

It should be noted that materials of the positive busbar 4 and the negative busbar 5 may be but are not limited to aluminum or copper, and the positive busbar 4 and the anode foil tab 100 are connected in a plurality of manners. For example, the positive busbar 4 is connected to the anode foil tab 100 through welding, riveting, or crimping. Similarly, the negative busbar 5 may also be connected to the cathode foil tab 101 through welding, riveting, or crimping.

In the foregoing embodiment, FIG. 5 is a diagram of a structure of a capacitor module according to an embodiment of this application. With reference to FIG. 3 and FIG. 5, the capacitor module further includes a packaging board 6. The packaging board 6 is connected to the opening of the housing 2. To be specific, the packaging board 6 is connected to the opening of the accommodating cavity, so that the packaging board and the housing are enclosed to form a sealed accommodating cavity. More specifically, the packaging board 6 may be fastened to the housing 2 in a manner of welding (laser welding, resistance welding, or ultrasonic welding), so as to seal the capacitor core package assembly 1, the positive busbar 4, the negative busbar 5, the press plate, and the like located in the accommodating cavity into the housing 2. In this manner, the plurality of capacitor core packages 10 included in the capacitor core package assembly 1 are packaged through one sealing plate 6. Compared with a case in which the capacitor module includes a plurality of discrete capacitors, and each discrete capacitor needs to be independently sealed, complexity of preparing the capacitor module can be reduced, and preparation costs can be reduced. In addition, the packaging board 6 includes a positive through hole and a negative through hole. The positive through hole is used to enable a positive binding post 40 included in the positive busbar 4 to run through, and the negative through hole is used to enable a negative binding post 50 included in the negative busbar 5 to run through. When the positive binding post 40 and the negative binding post 50 run through the positive through hole and the negative through hole, the positive through hole and the negative through hole may be further sealed by using a sealant or glass, so as to ensure air tightness inside the housing 2.

In an embodiment, to enable insulation isolation between the housing and the anode foil tab and the cathode foil tab of each capacitor core package, and prevent an electrical connection between the housing and the anode foil tab and the cathode foil tab of each capacitor core package, an insulation layer may be filled between the packaging board and the capacitor core package, the insulation layer may separate the anode foil tab and the cathode foil tab that are included in each capacitor core package from the housing. When the insulation layer is specifically disposed, the insulation layer is filled on a side that is of the positive busbar and the negative busbar and that faces the packaging board, or the anode foil tab and the cathode foil tab that are included in each capacitor core package may be separated from the housing.

A material of the insulation layer may be but is not limited to glass, resin, rubber, or the like.

In an embodiment, to prevent a short circuit caused by an excessively large current between the anode foil tab of the capacitor core package and the positive busbar, the anode foil tab of each capacitor core package and/or the positive busbar may include a fuse apparatus. Correspondingly, to prevent a short circuit caused by an excessively large current between the cathode foil tab of the capacitor core package and the negative busbar, the cathode foil tab of each capacitor core package and/or the negative busbar may also include a fuse apparatus, so that when the current is excessively large, at least one of the anode foil tab, the cathode foil tab, the positive busbar, and the negative busbar is fused.

The fuse apparatus may be, but is not limited to, a metal fuse, a thermal sensitive pill, a hole, or a metal fuse plate. The following uses an example in which the fuse apparatus is a hole for description.

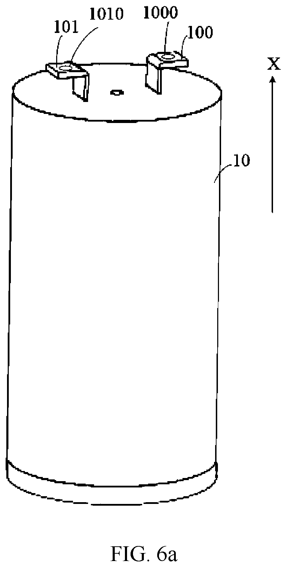

FIG. 6a is a diagram of another structure of a capacitor core package in a capacitor module according to an embodiment of this application. With reference to FIG. 6a, an X direction in FIG. 6a is a thickness direction of the anode foil tab 100 and a thickness direction of the cathode foil tab 101. It may be understood that the thickness direction of the anode foil tab 100 and the thickness direction of the cathode foil tab 101 are directions perpendicular to the bottom wall of the housing. To prevent an excessively large current of the anode foil tab 100 and the cathode foil tab 101 of the capacitor core package 10, the anode foil tab 100 includes a first hole 1000. The first hole 1000 is a fuse apparatus included in the anode foil tab 100. The first hole 1000 runs through the anode foil tab 100 in the thickness direction of the anode foil tab 100, and the cathode foil tab 101 includes a second hole 1010. The second hole 1010 is a fuse apparatus included in the cathode foil tab 101. The second hole 1010 runs through the cathode foil tab 101 in the thickness direction of the cathode foil tab 101. The first hole 1000 and the second hole 1010 may be disposed to reduce local flow areas of the anode foil tab 100 and the cathode foil tab 101. When currents of the anode foil tab 100 and the cathode foil tab 101 are excessively large, the first hole 1000 included in the anode foil tab 100 is fused, and the second hole 1010 included in the cathode foil tab 101 is fused, so as to prevent excessively large currents of the anode foil tab 100 and the cathode foil tab 101.

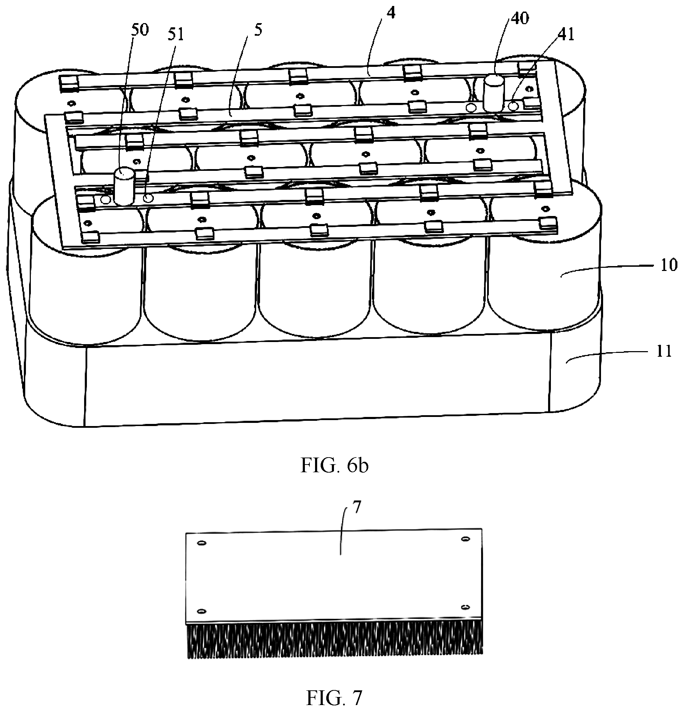

FIG. 6b is a diagram of a structure of a capacitor core package assembly in a capacitor module according to an embodiment of this application. With reference to FIG. 6b, the positive busbar 4 includes a third hole 41, the third hole 41 runs through the positive busbar 4 in a thickness direction of the positive busbar 4, and the third hole 41 is a fuse apparatus included in the positive busbar 4. There may be two third holes 41, and the two third holes 41 are located on two sides of the positive binding post 40 included in the positive busbar 4. The third hole 41 may be disposed to reduce a local flow area of the positive busbar 4. When a current of the positive busbar 4 is excessively large, the third hole 41 included in the positive busbar 4 is fused, so as to prevent the excessively large current of the positive busbar 4.

The negative busbar 5 includes a fourth hole 51, the fourth hole 51 runs through the negative busbar 5 in a thickness direction of the negative busbar 5, and the fourth hole 51 is a fuse apparatus included in the negative busbar 5. There may be two fourth holes 51, and the two fourth holes 51 are located on two sides of the negative binding post 50 included in the negative busbar 5. The fourth hole 51 may be disposed to reduce a local flow area of the negative busbar 5. When a current of the negative busbar 5 is excessively large, the fourth hole 51 included in the negative busbar 5 is fused, so as to prevent the excessively large current of the negative busbar 5.

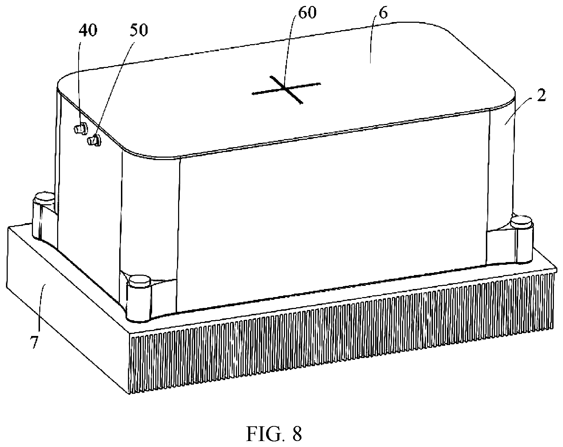

In the foregoing embodiment, FIG. 7 is a diagram of a structure of a heat sink in a capacitor module according to an embodiment of this application; and FIG. 8 is a diagram of another structure of a capacitor module according to an embodiment of this application. With reference to FIG. 7 and FIG. 8, to ensure that the heat generated by the capacitor core package can be dissipated quickly, the capacitor module further includes a heat sink 7, and the heat sink 7 is disposed on one side of the housing 2. Specifically, the heat sink 7 is located on a side away from the opening of the accommodating cavity included in the housing 2, so as to facilitate mounting between the housing 2 and the heat sink 7. A thermally conductive insulation adhesive or a thermally conductive silicone pad is filled between the heat sink 7 and the housing 2, to reduce thermal resistance between the housing 2 and the heat sink 7, thereby improving heat dissipation effect between the housing 2 and the heat sink 7.

The housing 2 may be connected to the heat sink 7 through potting fixing glue, or the housing 2 may include a connecting portion 22. The connecting portion 22 is disposed on a side away from the opening of the accommodating cavity. The connecting portion 22 may be a limiting block, the limiting block includes a plurality of positioning holes, and a bolt or another connecting piece may run through the positioning hole to fasten the heat sink 7 to the housing.

In the foregoing embodiment, with reference to FIG. 5 and FIG. 8, the packaging board 6 includes at least one pressure relief damper 60. When pressure in the capacitor module increases, a position of the pressure relief damper 60 opens, that is, the position of the pressure relief damper 60 cracks, so that pressure in the capacitor module is released. The pressure relief damper 60 is specifically a thinning portion formed on the packaging board. For example, the thinning portion may be a position at which a trench portion is formed on the packaging board, and the trench portion may be in a cross shape or another shape.

In an embodiment, each capacitor core package may be connected to a voltage divider resistor in parallel, and one thermistor may be inserted into each capacitor core package. A monitoring chip may be built in the capacitor module, and the monitoring chip is configured to monitor a divided voltage and a temperature of each capacitor core package, and can give an alarm in time.

In the foregoing embodiment, when the plurality of capacitor core packages include an aluminum capacitor core package and a thin film capacitor core package, the capacitor module having the plurality of capacitor core packages can filter a high-frequency ripple and a low-frequency ripple simultaneously.

The capacitor module provided in this application may be specifically used in a power converter. The power converter includes a power module and the foregoing capacitor module. The power module is electrically connected to the capacitor module, and the power module is configured to convert a direct current output by the capacitor module into an alternating current. In some embodiments, the power converter can be used in the field of electric vehicles. Specifically, the power converter is used in a motor controller included in an electric vehicle. In this case, the capacitor module can deal with a low-frequency ripple voltage caused by a counter electromotive force of a motor, to perform filtering and smoothing on the voltage for a main circuit and provide reactive power compensation. In some embodiments, the power converter can be further used in the photovoltaic field. Specifically, the power converter can be used in a photovoltaic system. In some embodiments, the power converter can be further used in a charging pile.

In an embodiment, with reference to FIG. 1, FIG. 3, and FIG. 5, the plurality of capacitor core packages 10 are distributed on the positioning plate 11 in an array. To be specific, the plurality of capacitor core packages 10 are integrated on the surface of the positioning plate 11, a gap exists between two adjacent capacitor core packages 10, the positioning plate 11 is mounted in the hollow accommodating cavity, the positive busbar 4 connects the anode foil tabs 100 of the plurality of capacitor core packages, the negative busbar 5 connects the cathode foil tabs 101 of the plurality of capacitor core packages 10, and the packaging board 6 covers the opening of the accommodating cavity, to seal the accommodating cavity, to form a sealed accommodating cavity. To be specific, the plurality of capacitor core packages 10 are sealed in one accommodating cavity, and each independent capacitor core package 10 does not need to be separately sealed, so as to improve sealing efficiency. In addition, when the packaging board 6 seals the plurality of capacitor core packages 10 in the accommodating cavity, the packaging board 6 may be provided with a positive through hole and a negative through hole for the positive binding post 40 included in the positive busbar 4 and the negative binding post 50 included in the negative busbar 5 to run through, so that the positive binding post 40 and the negative binding post 50 are exposed outside the capacitor module. To improve safety of the capacitor module, a plurality of pressure relief dampers 60 may be disposed on a surface of the packaging board 6. The plurality of pressure relief dampers 60 are distributed in an array, and each pressure relief damper 60 may correspond to one capacitor core package 10.

In another embodiment, with reference to FIG. 1, FIG. 2, FIG. 4, and FIG. 8, the housing 2 includes a plurality of rows of support columns 21, the plurality of rows of support columns 21 are fastened to the bottom wall of the accommodating cavity 20, one support column 21 runs through the plurality of capacitor core packages 10, and the press plate 3 cooperates with a part that is of the support portion and that runs through the capacitor core package 10, so that the capacitor core package 10 is fastened in the housing 2. The positive busbar connects the anode foil tabs of the plurality of capacitor core packages, the negative busbar connects the cathode foil tabs of the plurality of capacitor core packages, and the packaging board 6 covers the opening of the accommodating cavity 20, to seal the accommodating cavity. To be specific, the plurality of capacitor core packages 10 are sealed in one accommodating cavity, and each independent capacitor core package 10 does not need to be separately sealed, so as to improve sealing efficiency. In addition, when the packaging board 6 seals the plurality of capacitor core packages 10 in the accommodating cavity 20, the side wall of the housing 2 may include two lead-out holes 23, and the positive binding post 40 included in the positive busbar and the negative binding post 50 included in the negative busbar run through the lead-out holes 23, so that the positive binding post 40 and the negative binding post 50 are exposed outside the capacitor module. Correspondingly, in this manner, one pressure relief damper 60 may be disposed on the surface of the packaging board 6, so as to improve safety of the capacitor module.

Apparently, a person skilled in the art may make various modifications and variations to this application without departing from the protection scope of this application. This application is intended to cover these modifications and variations of this application provided that they fall within the scope of protection defined by the following claims and their equivalent technologies.

## Claims

1. A capacitor module, comprising a housing and a capacitor core package assembly, wherein
the housing comprises an accommodating cavity having an opening at one end, and the accommodating cavity accommodates the capacitor core package assembly; and
the capacitor core package assembly comprises a plurality of capacitor core packages, a gap exists between two adjacent capacitor core packages, the capacitor core package comprises a cathode foil, a part of the cathode foil is exposed on a surface of an end that is of the capacitor core package and that is away from the opening, and the exposed part of the cathode foil is in contact with the housing.

2. The capacitor module according to claim 1, wherein the capacitor core package further comprises an anode foil and a stop-coil strip, and the stop-coil strip is located on an outer circumferential side of the capacitor core package; and
the cathode foil is located between the anode foil and the stop-coil strip, and in a first direction, a length of the stop-coil strip is less than a length of the cathode foil; or
the anode foil is located between the cathode foil and the stop-coil strip, and in a first direction, a length of the cathode foil is greater than a length of the stop-coil strip and a length of the anode foil, wherein
the first direction is a direction perpendicular to a bottom wall of the housing.

3. The capacitor module according to claim 1, wherein the capacitor module further comprises a positioning plate, the positioning plate comprises a plurality of positioning portions, a gap exists between two adjacent positioning portions, and each of the positioning portions fastens one capacitor core package.

4. The capacitor module according to claim 1, wherein the capacitor module further comprises a plurality of support columns arranged in an array, the plurality of support columns are fastened to a bottom wall of the housing, each capacitor core package comprises a center hole, the center hole runs through the capacitor core package in a first direction, and the plurality of support columns respectively run through center holes of the plurality of capacitor core packages, wherein the first direction is a direction perpendicular to the bottom wall of the housing.

5. The capacitor module according to claim 4, wherein the capacitor module further comprises a press plate, the press plate comprises a plurality of fixing holes, a gap exists between two adjacent fixing holes, the press plate covers one end that is of the capacitor core package assembly and that faces the opening, and ends that are of the plurality of support columns and that are away from the bottom wall are separately fastened to the plurality of fixing holes.

6. The capacitor module according to any one of claims 1 to 5, wherein the capacitor core package assembly further comprises a positive busbar and a negative busbar, the positive busbar is connected to anode foil tabs of the plurality of capacitor core packages, the negative busbar is connected to cathode foil tabs of the plurality of capacitor core packages, and the positive busbar and the negative busbar are located at the end that is of the capacitor core package assembly and that faces the opening.

7. The capacitor module according to claim 6, wherein
the anode foil tab comprises a fuse apparatus; or
the positive busbar comprises a fuse apparatus; or
the cathode foil tab comprises a fuse apparatus; or
the negative busbar comprises a fuse apparatus.

8. The capacitor module according to claim 7, wherein
the fuse apparatus comprised in the anode foil tab is a first hole, and the first hole runs through the anode foil tab in a thickness direction of the anode foil tab; or
the fuse apparatus comprised in the cathode foil tab is a second hole, and the second hole runs through the cathode foil tab in a thickness direction of the cathode foil tab; or
the fuse apparatus comprised in the positive busbar is a third hole, and the third hole runs through the positive busbar in a thickness direction of the positive busbar; or
the fuse apparatus comprised in the negative busbar is a fourth hole, and the fourth hole runs through the negative busbar in a thickness direction of the negative busbar.

9. The capacitor module according to any one of claims 6 to 8, wherein the capacitor module further comprises a packaging board, the packaging board is fastened to the opening of the housing, and the packaging board and the housing are enclosed to form a sealed accommodating cavity.

10. The capacitor module according to claim 9, wherein the positive busbar comprises a positive binding post, the negative busbar comprises a negative binding post, and both the positive binding post and the negative binding post run through the packaging board, or the positive binding post and the negative binding post run through a side wall of the housing.

11. The capacitor module according to claim 10, wherein the capacitor module further comprises an insulation layer, and the insulation layer is located between the capacitor core package assembly and the packaging board.

12. The capacitor module according to any one of claims 9 to 11, wherein the packaging board comprises at least one pressure relief damper.

13. The capacitor module according to claim 12, wherein there is one pressure relief damper, and the pressure relief damper is arranged at a center of the packaging board; or
there are a plurality of pressure relief dampers, and the plurality of pressure relief dampers are arranged in an array.

14. The capacitor module according to any one of claims 1 to 13, wherein the capacitor module further comprises a heat sink, and the heat sink is attached to the bottom wall of the housing.

15. The capacitor module according to any one of claims 1 to 14, wherein the capacitor core package is in a cylindrical shape or a rectangular shape.

16. A power converter, comprising a power module and the capacitor module according to any one of claims 1 to 15, wherein the power module is electrically connected to a capacitor core package assembly, and the power module is disposed on a side that is of the capacitor module and that is away from a bottom wall of the housing.
